# EUROPÄISCHE PATENTSCHRIFT

(11) **EP 3 518 207 B1**
(45) Veröffentlichungstag und Bekanntmachung des Hinweises auf die Patenterteilung: **25.06.2025**
(21) Anmeldenummer: 19152688.8
(22) Anmeldetag: 21.01.2019
(51) Int. Cl.: G08G 1/095, G01C 21/32, H04L 9/32, G06F 21/64, G01C 21/36, G08G 1/0967, H04L 9/00

(54) **VERFAHREN ZUM BEREITSTELLEN VERIFIZIERTER INFORMATIONEN ÜBER EIN VERKEHRSZEICHEN, VERKEHRSZEICHENANLAGE SOWIE VERFAHREN FÜR EIN NAVIGATIONSSYSTEM ZUR VERIFIKATION EINES VERKEHRSZEICHENS**
METHOD FOR PROVIDING VERIFIED INFORMATION ABOUT A TRAFFIC SIGN, TRAFFIC SIGN SYSTEM AND METHOD FOR A NAVIGATION SYSTEM FOR VERIFYING A TRAFFIC SIGN
PROCÉDÉ DE FOURNITURE DES INFORMATIONS VÉRIFIÉES SUR UN PANNEAU DE SIGNALISATION ROUTIÈRE, INSTALLATION DE PANNEAUX DE SIGNALISATION ROUTIÈRE AINSI QUE PROCÉDÉ POUR UN SYSTÈME DE NAVIGATION PERMETTANT DE VÉRIFIER UN PANNEAU DE SIGNALISATION ROUTIÈRE

(30) Priorität: 30.01.2018 DE 102018201417
(43) Veröffentlichungstag der Anmeldung: 31.07.2019
(73) Patentinhaber: VOLKSWAGEN AKTIENGESELLSCHAFT, 38440 Wolfsburg (DE)
(72) Erfinder: Wernecke, Jan, 39116 Magdeburg (DE)

(56) Entgegenhaltungen:
- EP-A2- 2 327 961
- WO-A1-2017/180382
- CN-A- 107 045 650
- DE-A1- 102016 208 621
- US-A1- 2013 282 154
- YUAN YONG ET AL: "Towards blockchain-based intelligent transportation systems", 2016 IEEE 19TH INTERNATIONAL CONFERENCE ON INTELLIGENT TRANSPORTATION SYSTEMS (ITSC), IEEE, 1 November 2016 (2016-11-01), pages 2663 - 2668, XP033028713, DOI: 10.1109/ITSC.2016.7795984

## Beschreibung

Die vorliegende Erfindung bezieht sich auf das Bereitstellen verifizierter Informationen über Verkehrszeichen. Insbesondere bezieht sich die vorliegende Erfindung auf ein Verfahren zum Bereitstellen verifizierter Informationen über ein Verkehrszeichen.

Konventionelle Verkehrsinfrastruktur ist dazu ausgebildet, um optisch von einem menschlichen Fahrer eines Fahrzeugs wahrgenommen zu werden. Ein Fahrzeug ist ein mobiles Verkehrsmittel für den Transport von Personen oder Gütern. Bei einem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die von einem Motor angetriebene Räder (sowie optional ein Antriebsstrangsystem) umfasst.

In Druckschrift EP 2 469 230 A1 wird ein Verfahren zum Aktualisieren von Kartendaten basierend auf Kameraaufnahmen vorgeschlagen.

Mit dem verstärkten Aufkommen autonomer Fahrfunktionen für Fahrzeuge kommt die konventionelle Verkehrsinfrastruktur an ihre Grenzen. Beispielsweise kann ein Verkehrszeichen optisch derart manipuliert werden, dass des durch optische Verkehrszeichenerkennungssysteme im Fahrzeug nicht mehr korrekt erkannt werden kann. Dies kann für einen gezielten Angriff auf das Fahrzeug genutzt werden.

Deshalb wird in Druckschrift DE 10 2016 208 621 A1 ein Verfahren zum Verifizieren von Inhalt und Aufstellort von Verkehrszeichen vorgeschlagen.

In Druckschrift EP 2 327 961 A2 wird ein Verfahren vorgeschlagen, bei dem ein Nutzer selbst Kartenfehler korrigieren und diese Korrekturen auch mit anderen Nutzern teilen kann.

In Druckschrift EP 0521486 A1 wird ferner vorgeschlagen, Informationen betreffend ein Verkehrszeichen mittels eines am Verkehrszeichen angebrachten Funksenders in ein Fahrzeug zu übertragen. Die Funkverbindung ist dabei unverschlüsselt und kann daher einfach manipuliert werden. Das Fahrzeug ist somit weiterhin nicht gegen Angriffe abgesichert.

Weiterhin wird in Druckschrift WO 2017/190794 A1 vorgeschlagen, vorbeifahrende Fahrzeuge mit einer an einem Verkehrsschild angebrachten Datenverarbeitungsanlage verschlüsselt kommunizieren zu lassen, um über die Sensorik des Fahrzeugs Informationen über Merkmale der Verkehrsinfrastruktur zu sammeln. Derart können über das Fahrzeug Informationen über die Verkehrsinfrastruktur gesammelt werden, um Straßenkarten oder Datenbanken zu aktualisieren. Jedoch werden hierzu die von beliebigen Fahrzeugen übermittelten Informationen genutzt. Über eines oder mehrere entsprechend manipulierte Fahrzeuge kann somit weiterhin jegliche gewünschte Fehlinformation betreffend Verkehrsinfrastruktur verbreitet werden. Mit anderen Worten: Die von den Fahrzeugen übertragenen Informationen über die Verkehrsinfrastruktur können nicht verifiziert werden, so dass ein Einfallstor für gezielte Manipulationen offenbleibt.

Druckschrift WO 2017/180382 A1 schlägt weiterhin vor, ein dezentrales Netzwerk zu verwenden, bei denen mehrere Fahrzeuge jeweils gegenseitig Informationen betreffend Verkehrsinfrastruktur mittels mehrfacher Sensierung der Umgebung durch mehrere Fahrzeuge zu verifizieren versuchen. Wird nun von einem ersten manipulierten Fahrzeug eine gezielte Fehlinformation in das dezentrale Netzwerk eingespeist und durch ein weiteres manipuliertes Fahrzeug bestätigt, wird diese Fehlinformation aufgrund der Validierung durch das zweite manipulierte Fahrzeug als korrekt erachtet. Über entsprechend manipulierte Fahrzeuge kann somit auch bei diesem Ansatz weiterhin jegliche gewünschte Fehlinformation betreffend Verkehrsinfrastruktur verbreitet werden. Mit anderen Worten: Die von den Fahrzeugen übertragenen Informationen über die Verkehrsinfrastruktur können auch hier nicht zuverlässig verifiziert werden.

Es besteht somit ein Erfordernis, verifizierte Informationen über Verkehrszeichen bereitzustellen bzw. eine Möglichkeit bereitzustellen, um Informationen über Verkehrszeichen zu verifizieren.

Die vorliegende Erfindung ermöglicht dies durch ein Verfahren zum Bereitstellen verifizierter Informationen über ein Verkehrszeichen. Ein Verkehrszeichen ist ein Zeichen zur Regelung bzw. Beeinflussung des Straßenverkehrs. Das Verkehrszeichen wird gewöhnlich von einer autorisierten Stelle (z.B. ein öffentlich-rechtliches Gemeinwesen) errichtet, jedoch können auch Angreifer bestehende Verkehrszeichen manipulieren oder nicht-autorisierte Verkehrszeichen errichten.

Das Verfahren umfasst ein Empfangen von Informationen über das Verkehrszeichen von einem elektronischen Verkehrsschild in Folge eines Wechsels des von dem elektronischen Verkehrsschild angezeigten Verkehrszeichens. Elektronische Verkehrsschilder können eine Mehrzahl an Verkehrszeichen durch entsprechende Ansteuerung ihrer Anzeige darstellen. Die Informationen über das Verkehrszeichen sind Informationen, welche das Verkehrszeichen charakterisieren bzw. beschreiben.

Ferner umfasst das Verfahren ein Prüfen, ob das elektronische Verkehrsschild eine autorisierte Informationsquelle ist. Nur wenn das elektronische Verkehrsschild eine autorisierte Informationsquelle ist, umfasst das Verfahren weiterhin ein Speichern der Informationen über das Verkehrszeichen in einer Blockchain (Blockkette)-Datenbank. Eine Blockchain-Datenbank ist eine kontinuierlich erweiterbare Liste von Datensätzen, genannt Blöcke, welche mittels kryptographischer Verfahren miteinander verkettet bzw. verknüpft sind. Blockchain-Datenbanken sind manipulationssicher hinsichtlich der bereits darin gespeicherten Daten. Im vorgeschlagenen Verfahren werden die Informationen über das Verkehrszeichen nur in der Blockchain-Datenbank gespeichert, wenn das elektronische Verkehrsschild eine autorisierte Informationsquelle, d.h. eine vertrauenswürdige bzw. bekannte vorausgewählte Informationsquelle, ist. Nur autorisierte Informationsquellen sind berechtigt, die Blockchain-Datenbank zu ändern bzw. zu aktualisieren (d.h. nur autorisierte Informationsquelle haben einen Schreibzugriff auf die Blockchain-Datenbank). Entsprechend kann sichergestellt werden, dass in der Blockchain-Datenbank nur authentifizierte Informationen über autorisierte Verkehrszeichen gespeichert werden, die einer vertrauenswürdigen, abgesicherten bzw. autorisierten Quelle entstammen. Ist das elektronische Verkehrsschild keine autorisierte Informationsquelle, werden die von dem elektronischen Verkehrsschild bereitgestellten Informationen über das Verkehrszeichen nicht in der Blockchain-Datenbank gespeichert. Derart kann die Richtigkeit der in der Blockchain-Datenbank gespeicherten Informationen verifiziert bzw. sichergestellt werden. Einmal in der Blockchain-Datenbank gespeicherte Informationen können aufgrund der oben angedeuteten Struktur von Blockchain-Datenbanken nicht mehr manipuliert werden. Die Blockchain-Datenbank bietet somit hinsichtlich ihrer Richtigkeit verifizierte Informationen über das Verkehrszeichen. Bei einem Wechsel des dargestellten Verkehrszeichens kann somit umgehend die Blockchain-Datenbank aktualisiert werden, um Dritten aktuelle und verifizierte Informationen über das aktuell von dem elektronischen Verkehrsschild angezeigte Verkehrszeichen bereitzustellen. Um das elektronische Verkehrsschild zu autorisieren kann diesem z.B. eine separate Kennung oder eine Kennung eines Betreibers bzw. Verantwortlichen für das elektronische Verkehrsschild zugeordnet sein.

Das Verfahren umfasst ferner ein Gestatten eines Lesezugriffs auf die Blockchain-Datenbank, um so Dritten die Möglichkeit zu geben, auf die in der Blockchain-Datenbank gespeicherten verifizierten Informationen über das Verkehrszeichen zugreifen zu können. Insbesondere autonome (automatische) Fahrzeuge bzw. Navigationssysteme können mittels des Lesezugriffs auf die Blockchain-Datenbank über sonstige Kanäle (z.B. Funkübermittlung oder optische Erkennung) empfangene Informationen über das Verkehrszeichen auf ihre Richtigkeit hin prüfen. Die Möglichkeit der Manipulation von autonomen Fahrzeugen durch Manipulation von physischen Verkehrszeichen an Fahrbahnen oder Manipulation von in digitalen Straßenkarten verzeichneten Verkehrszeichen kann somit wirksam unterbunden werden. Der Lesezugriff kann sowohl jedermann bzw. jeder elektronischen Datenverarbeitungsanlage gestattet werden als auch nur ausgewählten Personen bzw. ausgewählten elektronischen Datenverarbeitungsanlagen (z.B. nur solche, die einen entsprechenden Dienst abonnieren). Ein wesentlicher Vorteil von Blockchain-Datenbanken gegenüber z.B. serverbasierten Standarddatenbank liegt darin, dass keine ständige Verbindung zur Datenbank nötig ist. Kann ein Fahrzeug beispielsweise aufgrund fehlender Netzwerkverbindung (z.B. Funkloch) keinen mit der Blockchain-Datenbank gekoppelten Zentralserver erreichen, um die Gültigkeit eines Verkehrszeichens zu verifizieren, kann über die dezentrale Verteilung der Informationen der Blockchain-Datenbank (z.B. im eigenen Fahrzeug, am Verkehrszeichen, in benachbarten Fahrzeugen, sonstigen lokal erreichbaren Rechnern, z.B. freies WLAN) das Zeichen dennoch verifiziert werden und z.B. auch zwischenzeitlich aktualisierte Elemente der Blockchain-Datenbank erhalten werden.

Gemäß Ausführungsbeispielen können die Informationen über das Verkehrszeichen neben anderen Informationen beispielsweise zumindest eine der folgenden Informationen umfassen:
- Informationen über eine räumliche Position des Verkehrszeichens in einem Verkehrsraum (z.B. absolute Koordinate oder Kilometrierung entlang einer Fahrbahn, Position relativ zur Fahrbahn);
- Informationen über eine Art des Verkehrszeichens (z.B. Zeichennummer gemäß Straßenverkehrsordnung oder Art der durch das Verkehrszeichen symbolisierten Regelung);
- Informationen über eine zeitliche Gültigkeit des Verkehrszeichens (z.B. Verkehrszeichen gilt von Zeitpunkt T₁ bis Zeitpunkt T₂ oder Verkehrszeichen gilt ab Zeitpunkt T₁ oder Verkehrszeichen gilt bis Zeitpunkt T₂);
- Informationen über eine fahrtrichtungsabhängige Gültigkeit des Verkehrszeichens (d.h. für welche Fahrtrichtung der Fahrbahn gilt das Verkehrszeichen);
- Informationen über eine fahrtspurabhängige Gültigkeit des Verkehrszeichens (d.h. für welche Fahrspur(en) gilt das Verkehrszeichen - z.B. nur für die äußerst linke oder die äußerst rechte Fahrspur bei einer mehrspurigen Fahrbahn); und
- Informationen über eine relative räumliche Anordnung des Verkehrszeichens in Bezug auf weitere benachbart eingerichtete Verkehrszeichen (z.B. wie ist das Verkehrszeichen relativ zu anderen Verkehrszeichen an einem Trägermast oder einer Trägerbrücke angeordnet - beispielsweise Reihenfolge der Verkehrsschilder von oben nach unten oder von links nach rechts).

In einigen Ausführungsbeispielen umfasst das Prüfen, ob das elektronische Verkehrsschild eine autorisierte Informationsquelle ist, ein Prüfen, ob eine Kennung des elektronischen Verkehrsschilds einer einzelnen vorbestimmten Kennung oder einer einer Mehrzahl an vorbestimmten Kennungen entspricht. Jeder autorisierten Informationsquelle kann z.B. im Rahmen einer Registrierung eine bekannte (vorbestimmte) Kennung zugeordnet werden (z.B. eine MAC-Adresse, ein Benutzername etc.). Entsprechend kann die Prüfung des elektronischen Verkehrsschilds hinsichtlich seiner Autorisierung, die Blockchain-Datenbank zu ändern, einfach über den Vergleich ihrer Kennung mit der zumindest einen vorbestimmten Kennung erfolgen.

In einer Ausführungsform, die nicht Teil der beanspruchten Erfindung ist, kann die vorbestimmte Kennung z.B. eine einer für den Straßenbau zuständigen Behörde, der Polizei, der Feuerwehr, einem Ordnungsamt, einem Straßenbauunternehmen, einem Umzugsunternehmen, einem Entsorgungsunternehmen, einem Straßenreinigungsunternehmen, einem Parkplatzbewirtschafter oder einem Mautbetreiber zugeordnete Kennung sein. Mit anderen Worten: Die vorgenannten Institutionen können Beispiele für autorisierte Informationsquellen sein. Die Einschränkung der autorisierten Informationsquellen auf bestimmte, vertrauenswürdige Institutionen kann verhindern, dass manipulierte Daten in die Blockchain-Datenbank eingeschleust werden.

Das Prüfen, ob die Informationsquelle eine autorisierte Informationsquelle ist, kann optional einen oder mehrere weitere Prüfungsschritte umfassen. Nachfolgend sind drei optionale weitere Prüfungsschritte beschrieben:
Falls die Informationen über das Verkehrszeichen Informationen über eine Position des Verkehrszeichens umfassen, kann das Prüfen, ob die Informationsquelle eine autorisierte Informationsquelle ist, gemäß Ausführungsbeispielen beispielsweise ein Prüfen, ob die vorbestimmten Kennung für die Position des Verkehrszeichens autorisiert ist, umfassen. Beispielsweise kann eine bestimmte autorisierte Informationsquelle bzw. vertrauenswürdige Institutionen nur berechtigt sein, Verkehrsschilder in einem bestimmten Bereich/Gebiet aufzustellen bzw. zu ändern. Entsprechend kann geprüft werden, ob diese im Rahmen ihrer örtlich beschränkten Berechtigung handelt. Ein Umzugsunternehmen kann z.B. nur berechtigt sein in einer bestimmten Straße ein temporäres Halteverbotsschild aufgrund eines durchgeführten Umzugs aufzustellen. Durch die vorgenannte Prüfung kann sichergestellt werden, dass das Umzugsunternahmen auch nur im Rahmen seiner Berechtigung die Blockchain-Datenbank ändern kann.

Falls die Informationen über das Verkehrszeichen Informationen über eine Art des Verkehrszeichens umfassen, kann das Prüfen, ob die Informationsquelle eine autorisierte Informationsquelle ist, gemäß Ausführungsbeispielen beispielsweise ein Prüfen, ob die vorbestimmten Kennung für die Art des Verkehrszeichens autorisiert ist, umfassen. Beispielsweise kann eine bestimmte autorisierte Informationsquelle bzw. vertrauenswürdige Institutionen nur berechtigt sein, Verkehrsschilder einer bestimmten Art (z.B. nur Halteverbotsschilder) aufzustellen bzw. zu ändern. Entsprechend kann geprüft werden, ob diese im Rahmen ihrer sachlich beschränkten Berechtigung handelt. Ein Umzugsunternehmen kann z.B. nur berechtigt sein ein temporäres Halteverbotsschild aufgrund eines durchgeführten Umzugs aufzustellen. Durch die vorgenannte Prüfung kann sichergestellt werden, dass das Umzugsunternahmen auch nur im Rahmen seiner Berechtigung die Blockchain-Datenbank ändern kann.

Falls die Informationen über das Verkehrszeichen Informationen über eine zeitliche Gültigkeit des Verkehrszeichens umfassen, kann das Prüfen, ob die Informationsquelle eine autorisierte Informationsquelle ist, gemäß Ausführungsbeispielen beispielsweise ein Prüfen, ob die vorbestimmten Kennung für den Zeitraum der zeitlichen Gültigkeit des Verkehrszeichens autorisiert ist, umfassen. Beispielsweise kann eine bestimmte autorisierte Informationsquelle bzw. vertrauenswürdige Institutionen nur berechtigt sein, Verkehrsschilder nur für einen bestimmten Zeitraum aufzustellen bzw. zu ändern. Entsprechend kann geprüft werden, ob diese im Rahmen ihrer zeitlich beschränkten Berechtigung handelt. Ein Umzugsunternehmen kann z.B. nur berechtigt sein ein temporäres Halteverbotsschild an einem bestimmten Tag aufgrund eines durchgeführten Umzugs aufzustellen. Durch die vorgenannte Prüfung kann sichergestellt werden, dass das Umzugsunternahmen auch nur im Rahmen seiner Berechtigung die Blockchain-Datenbank ändern kann.
Fig. 1 zeigt ein Flussdiagram eines Ausführungsbeispiels eines Verfahrens zum Bereitstellen verifizierter Informationen über ein Verkehrszeichen;
Fig. 2 zeigt eine Verkehrszeichenanlage;
Fig. 3 zeigt ein Navigationssystem; und
Fig. 4 zeigt ein Fahrzeug.

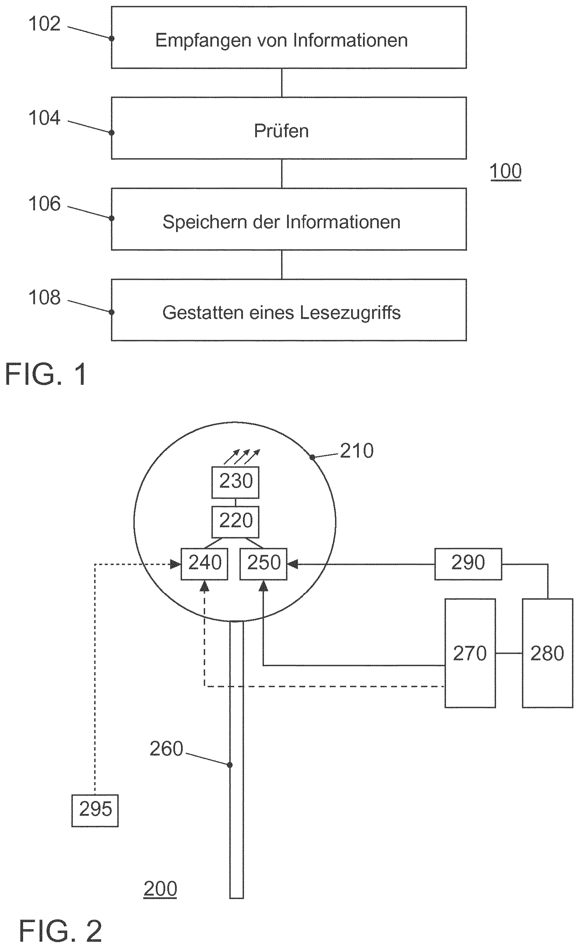

In Fig. 1 ist ein Verfahren 100 zum Bereitstellen verifizierter Informationen über ein Verkehrszeichen gezeigt. Das Verfahren 100 umfasst ein Empfangen 102 von Informationen über das Verkehrszeichen von einer Informationsquelle sowie ein Prüfen 104, ob die Informationsquelle eine autorisierte Informationsquelle ist. Nur wenn die Informationsquelle eine autorisierte Informationsquelle ist, umfasst das Verfahren 100 weiterhin ein Speichern 106 der Informationen über das Verkehrszeichen in einer Blockchain-Datenbank. Ist die Informationsquelle keine autorisierte Informationsquelle, werden die Informationen über das Verkehrszeichen nicht in der Blockchain-Datenbank gespeichert. Das Verfahren 100 umfasst ferner ein Gestatten 108 eines Lesezugriffs auf die Blockchain-Datenbank.

Durch das Verfahren 100 kann Dritten die Möglichkeit gegeben werden, auf die in der Blockchain-Datenbank gespeicherten verifizierten Informationen über das Verkehrszeichen zuzugreifen. Die sicherheitstechnischen Vorteile der Blockchain-Technologie gegen Manipulation in Kombination mit den vielfältigen Möglichkeiten legalisierte Transaktionen vorzunehmen werden von keiner anderen kryptographischen Lösung erreicht. Das Verfahren 100 kann somit die Nutzung der Blockchain-Datenbanktechnologie zur Sicherung der Verkehrszeicheninfrastruktur für z.B. autonome Fahrzeug ermöglichen.

Weitere Details und Aspekte des Verfahrens 100 sind in Zusammenhang mit einem oder mehreren weiteren Ausführungsbeispielen beschrieben. Das Verfahren 100 kann eines oder mehrere optionale Merkmale gemäß einem oder mehreren der weiteren Ausführungsbeispiele umfassen.

Fig. 2 zeigt im Weiteren eine Verkehrszeichenanlage 200, die ein auf einem Verkehrszeichenträger 260 montiertes Verkehrszeichen 210 in Form eines Schilds umfasst. Der Verkehrszeichenträger 260 ist in Fig. 2 beispielhaft als Trägermast abgebildet. Alternativ kann der Verkehrszeichenträger 260 beispielsweise auch als eine Trägerbrücke, welche eine oder mehrere Fahrspuren einer Fahrbahn überspannt, ausgebildet sein. Neben dem Verkehrszeichen 210 kann die Verkehrszeichenanlage 200 auch eines oder mehrere weitere Verkehrszeichen (nicht gezeigt) umfassen. Erfindungsgemäß ist das Verkehrszeichen 210 als elektronisches Verkehrszeichen ausgebildet.

Die Verkehrszeichenanlage 200 umfasst ferner einen Speicher 220, der eingerichtet ist, Informationen über das Verkehrszeichen 210 zu speichern. Dabei entsprechen die Informationen über das Verkehrszeichen 210 Datenbankinformationen, die von einer autorisierten Informationsquelle in einer öffentlich zugänglichen Blockchain-Datenbank 280 hinterlegt sind. Obwohl die Blockchain-Datenbank 280 als eine einzelne Entität dargestellt ist, kann die Blockchain-Datenbank 280 in einigen Ausführungsbeispielen auch eine verteilte Blockchain-Datenbank sein. Der Speicher 220 der Verkehrszeichenanlage 200 kann somit als elektronische Börse (engl. wallet) aufgefasst werden, in dem die Informationen über das Verkehrszeichen 210 gespeichert sind. In der elektronischen Börse kann neben der Ortskoordinate des Verkehrszeichens 210 beispielsweise auch seine Position am Fahrbahnrand bzw. über der Fahrbahn gespeichert sein. Umfasst die Verkehrszeichenanlage 200 mehrere Verkehrszeichen, so können die unterschiedlichen Verkehrszeichen temporär (d.h. mit begrenzter Gültigkeit) oder dauerhaft in der elektronischen Börse eingebucht sein. Für jedes Verkehrszeichen können neben seiner Gültigkeitszeit auch ein Richtungsvektor, der eine fahrtrichtungsabhänige Gültigkeit angibt, oder Informationen über eine Reihenfolge der mehreren Zeichen am gleichen Trägermast bzw. der gleichen Trägerbrücke in der Börse gespeichert sein.

Ferner umfasst die Verkehrszeichenanlage 200 eine Ausgabevorrichtung 230, die eingerichtet ist, die Informationen über das Verkehrszeichen auszugeben (z.B. mittels geeigneter Sendevorrichtung nebst Antenne). Die Verkehrszeichenanlage 200 ist somit in der Lage, seine aktuelle Bestückung mit Verkehrszeichen z.B. dauerhaft oder auf Anfrage auszugeben. Wie bereits oben angedeutet kann das Aussenden der Informationen auf unterschiedliche Arten erfolgen (z.B. optisch, WLAN, Bluetooth, UMTS, LTE, UKW oder beliebige andere Funksignale etc.).

Mittels der kryptographischen Technologien der Blockchain kann jedes Fahrzeug, das in die Blockchain eingebunden ist, die Gültigkeit der von der Verkehrszeichenanlage 200 empfangenen Informationen für seine aktuelle Position und/oder Zeit verifizieren. Sicherheitsrelevante Fahrmanöver können so vor Manipulation durch unautorisierte bzw. manipulierte Verkehrszeichen geschützt werden.

Das Aus- bzw. Einbuchen von Verkehrszeichen in den Speicher 220 in die Blockchain-Datenbank 280 kann von unterschiedlichen autorisierten Stellen (d.h. autorisierten Informationsquellen) vorgenommen werden, da diese über die verteilte Blockchain-Datenbank verwaltet und verifiziert werden können. Wie bereits oben angedeutet, kann die Rechtesteuerung örtlich, zeitlich und inhaltlich beschränkt sein.

Buchungen können z.B. per Fernzugriff vorgenommen werden, wenn die Verkehrszeichenanlage 200 online erreichbar ist. Dazu kann die Verkehrszeichenanlage 200 optional einen Empfänger 240 umfassen, der eingerichtet ist, die Informationen über das Verkehrszeichen 210 drahtlos von einem mit der Blockchain-Datenbank 280 gekoppelten Server 270 zu empfangen.

Alternativ kann auch kabelgebunden eine autorisierte Umbuchung vor Ort vorgenommen werden. Dazu kann die Verkehrszeichenanlage 200 eine drahtgebundene Schnittstelle 250 umfassen, die eingerichtet ist, die Informationen über das Verkehrszeichen 210 drahtgebunden von einem mit der Blockchain-Datenbank 280 gekoppelten Bediengerät (z.B. Laptop, Tablet-Computer oder spezielles Handterminal) oder auch drahtgebunden von dem mit der Blockchain-Datenbank 280 gekoppelten Server 270 zu empfangen.

Ebenso kann einer z.B. nicht online erreichbarer Verkehrszeichenanlage 200 seine neue verifizierte Belegung über ein vorbeifahrendes Fahrzeug mitgeteilt werden. Dazu kann der Empfänger 240 alternativ oder ergänzend eingerichtet sein, die Informationen über das Verkehrszeichen 210 drahtlos von einem mit der Blockchain-Datenbank 280 gekoppelten Fahrzeug 295 zu empfangen. Derart kann jedes beliebige in die Blockchain eingebundene Fahrzeug als Kurier für eine verschlüsselte Lieferung von Informationen an die elektronische Börse einer auf dem Weg liegenden Verkehrszeichenanlage genutzt werden. Dieser Ansatz kann z.B. für abgelegene Orte oder als Rückfalllösung bei gestörter bzw. eingeschränkter Erreichbarkeit über zellulare Netzwerke genutzt werden.

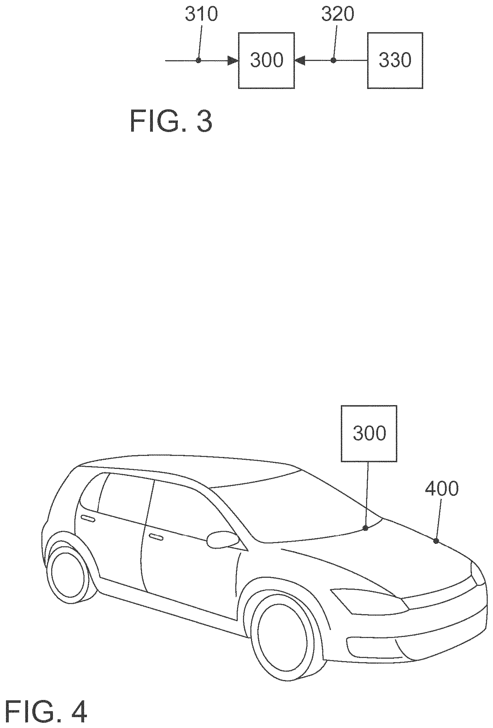

Fig. 3 zeigt weiterhin noch ein Navigationssystem 300, welches entsprechend eine Blockchain-Datenbank zur Verifikation empfangener erster Informationen 310 über ein Verkehrszeichen nutzt. Die ersten Informationen 310 über das Verkehrszeichen können von einer beliebigen oder auch unbekannten Quelle stammen, weshalb es unklar sein kann, ob die ersten Informationen korrekt sind. Die ersten Informationen 310 können beispielsweise von einem dem Verkehrszeichen zugeordneten Sender, einer digitalen Straßenkarte oder einem optischen Erkennungssystem eines Fahrzeugs empfangen werden.

Das Navigationssystem 300 gleicht die ersten Informationen 310 daher mit in einer Blockchain-Datenbank 330 gespeicherten zweiten Informationen 320 über das Verkehrszeichen ab. Dabei sind die zweiten Informationen 320 von einer autorisierten Informationsquelle in der Blockchain-Datenbank 330 hinterlegt und somit korrekt bzw. nicht manipuliert.

Nur wenn die ersten Informationen mit den zweiten Informationen übereinstimmen, d.h. die ersten Informationen als korrekt verifiziert wurde, verwendet das Navigationssystem 300 die ersten Informationen 310.

Das Navigationssystem 300 kann derart die Richtigkeit der ersten Informationen 310 verifizieren. Die Möglichkeit der Manipulation des Navigationssystems 300 durch Manipulation von Verkehrszeichen kann somit vermieden werden.

Das Navigationssystem 300 kann beispielsweise ein in einem mobilen Endgerät (z.B. Mobiltelefon, Tablet-Computer oder Laptop) implementiertes Navigationssystem oder ein in einem Fahrzeug verbautes bzw. verwendetes bzw. implementiertes Navigationssystem sein.

Fig. 4 zeigt abschließend noch ein Fahrzeug 400, welches das Navigationssystem 300 umfasst. Beispielsweise kann Fahrzeug 400 ein autonomes Fahrzeug sein, welches sich unter Verwendung des Navigationssystems 300 (und optional weiterer Fahrzeugsensorik) autonom im Straßenverkehr bewegt. Entsprechend kann die Manipulation des Fahrzeugs 400 durch Manipulation von Verkehrszeichen vermieden werden. Insbesondere können sicherheitsrelevante Fahrmanöver des Fahrzeugs 400 derart vor Manipulation durch unautorisierte Verkehrszeichen geschützt werden. Das Fahrzeug 400 kann somit immun sein gegenüber z.B. provozierten Unfällen bzw. Verkehrsverstößen oder nachteiliger Routenführung, welche durch manipulierte Verkehrsschilder ausgelöst werden sollen.

Alternativ kann die in Zusammenhang mit dem Navigationssystem 300 beschriebene Verifikation von Verkehrszeichen auch durch jegliche sonstige Elektronik bzw. Prozessoren oder programmierbare Hardwarekomponenten des Fahrzeugs 400 ausgeführt werden. Entsprechend kann eine Kopie der Blockchain-Datenbank z.B. auch in einem Speicher des Fahrzeugs 400 gespeichert sein oder das Fahrzeug 400 kann über einen Empfänger drahtlos die in der Blockchain-Datenbank über ein Verkehrszeichen gespeicherten Informationen von einem mit der Blockchain-Datenbank gekoppelten Server empfangen.

Ähnlich wie oben für die Verkehrszeichenanlage 200 beschrieben können weitere Fahrzeuge auch für die Aktualisierung der im Fahrzeug 400 gespeicherten Kopie der Blockchain-Datenbank genutzt werden. Beispielsweise kann das Fahrzeug 400 eines oder mehrere Elemente der Blockchain-Datenbank von einem weiteren (z.B. vorbeifahrenden) Fahrzeug empfangen und die lokale Kopie der Blockchain-Datenbank im Fahrzeug 400 basierend auf den empfangenen Elementen der Blockchain-Datenbank aktualisieren. Beispielsweise kann so in einem Gebiet ohne zellulare Netzabdeckung (d.h. in einem Funkloch) ein Fahrzeug, das offline ist, neue Datenbankbaustein von entgegenkommenden Fahrzeugen übernehmen, die zwar momentan selbst offline sind aber davor noch aktualisierte Daten empfangen haben.

### Bezugszeichenliste

- 100: Verfahren zum Bereitstellen verifizierter Informationen über ein Verkehrszeichen
- 102: Empfangen von Informationen über das Verkehrszeichen
- 104: Prüfen, ob die Informationsquelle eine autorisierte Informationsquelle ist
- 106: Speichern der Informationen über das Verkehrszeichen in einer Blockchain-Datenbank
- 108: Gestatten eines Lesezugriffs auf die Blockchain-Datenbank
- 200: Verkehrszeichenanlage
- 210: Verkehrszeichen
- 220: Speicher
- 230: Ausgabevorrichtung
- 240: Empfänger
- 250: drahtgebundene Schnittstelle
- 260: Verkehrszeichenträger
- 270: Server
- 280: Blockchain-Datenbank
- 290: Bediengerät
- 295: Fahrzeug
- 300: Navigationssystem
- 310: erste Informationen über das Verkehrszeichen
- 320: zweite Informationen über das Verkehrszeichen
- 330: Blockchain-Datenbank
- 400: Fahrzeug

## Patentansprüche

1. Verfahren (100) zum Bereitstellen verifizierter Informationen über ein Verkehrszeichen, umfassend:
Empfangen (102) von Informationen über das Verkehrszeichen von einem elektronischen Verkehrsschild in Folge eines Wechsels des von dem elektronischen Verkehrsschild angezeigten Verkehrszeichens;
Prüfen (104), ob das elektronische Verkehrsschild eine autorisierte Informationsquelle ist;
Speichern (106) der Informationen über das Verkehrszeichen in einer Blockchain-Datenbank, nur wenn das elektronische Verkehrsschild eine autorisierte Informationsquelle ist; und
Gestatten (108) eines Lesezugriffs auf die Blockchain-Datenbank.

2. Verfahren nach Anspruch 1, wobei die Informationen über das Verkehrszeichen zumindest eine der folgenden Informationen umfassen:
- Informationen über eine räumliche Position des Verkehrszeichens in einem Verkehrsraum;
- Informationen über eine Art des Verkehrszeichens;
- Informationen über eine zeitliche Gültigkeit des Verkehrszeichens;
- Informationen über eine fahrtrichtungsabhängige Gültigkeit des Verkehrszeichens;
- Informationen über eine fahrtspurabhängige Gültigkeit des Verkehrszeichens; und
- Informationen über eine relative räumliche Anordnung des Verkehrszeichens in Bezug auf weitere benachbart eingerichtete Verkehrszeichen.

3. Verfahren nach Anspruch 1 oder Anspruch 2, wobei das Prüfen (104), ob das elektronische Verkehrsschild eine autorisierte Informationsquelle ist, Folgendes umfasst:
Prüfen, ob eine Kennung des elektronischen Verkehrsschilds einer vorbestimmten Kennung entspricht.

4. Verfahren nach Anspruch 3, wobei das Prüfen (104), ob das elektronische Verkehrsschild eine autorisierte Informationsquelle ist, ferner Folgendes umfasst:
falls die Informationen über das Verkehrszeichen Informationen über eine Position des Verkehrszeichens umfassen, Prüfen, ob die vorbestimmte Kennung für die Position des Verkehrszeichens autorisiert ist; und/oder
falls die Informationen über das Verkehrszeichen Informationen über eine Art des Verkehrszeichens umfassen, Prüfen, ob die vorbestimmte Kennung für die Art des Verkehrszeichens autorisiert ist; und/oder
falls die Informationen über das Verkehrszeichen Informationen über eine zeitliche Gültigkeit des Verkehrszeichens umfassen, Prüfen, ob die vorbestimmte Kennung für den Zeitraum der zeitlichen Gültigkeit des Verkehrszeichens autorisiert ist.

## Claims

1. Method (100) for providing verified information about a traffic sign, comprising:
receiving (102) information about the traffic sign from an electronic traffic signboard following a change in the traffic sign displayed by the electronic traffic signboard;
checking (104) whether the electronic traffic signboard is an authorized information source;
storing (106) the information about the traffic sign in a blockchain database, only if the electronic traffic signboard is an authorized source of information; and
allowing (108) read access to the blockchain database.

2. Method according to claim 1, wherein the information about the traffic sign comprises at least one of the following pieces of information:
- information about a spatial position of the traffic sign in a traffic space;
- information about a type of traffic sign;
- information about a temporal validity of the traffic sign;
- information about a direction-dependent validity of the traffic sign;
- information about a lane-dependent validity of the traffic sign; and
- information about a relative spatial arrangement of the traffic sign in relation to further traffic signs installed adjacently.

3. Method according to claim 1 or claim 2, wherein checking (104) whether the electronic traffic signboard is an authorized information source comprises:
checking whether an identifier of the electronic traffic signboard corresponds to a predetermined identifier.

4. Method according to claim 3, wherein checking (104) whether the electronic traffic signboard is an authorized information source further comprises the following:
if the information about the traffic sign comprises information about a position of the traffic sign, checking whether the predetermined identifier is authorized for the position of the traffic sign; and/or
if the information about the traffic sign comprises information about a type of traffic sign, checking whether the predetermined identifier is authorized for the type of traffic sign; and/or
if the information about the traffic sign comprises information about a temporal validity of the traffic sign, checking whether the predetermined identifier is authorized for the period of temporal validity of the traffic sign.

## Revendications

1. Procédé (100) permettant de fournir des informations vérifiées concernant un signal routier, comprenant :
la réception (102) d'informations concernant le signal routier à partir d'un panneau de signalisation électronique suite à un changement du signal routier affiché par le panneau de signalisation électronique ;
le fait de vérifier (104) si le panneau de signalisation électronique est une source d'information autorisée ;
le stockage (106) des informations concernant le signal routier dans une base de données de chaîne de blocs, uniquement si le panneau de signalisation électronique est une source d'information autorisée ; et
l'autorisation (108) d'un accès en lecture à la base de données de chaîne de blocs.

2. Procédé selon la revendication 1, dans lequel les informations concernant le signal routier comprennent au moins l'une des informations suivantes :
- informations concernant une position spatiale du signal routier dans un espace de circulation ;
- informations concernant un type de signal routier ;
- informations concernant une validité temporelle du signal routier ;
- informations concernant une validité du signal routier en fonction du sens de circulation ;
- informations concernant la validité du signal routier en fonction de la voie de circulation ; et
- informations concernant une disposition spatiale relative du signal routier par rapport à d'autres signaux routiers installés à proximité.

3. Procédé selon la revendication 1 ou la revendication 2, dans lequel le fait de vérifier (104) que le panneau de signalisation électronique est une source d'information autorisée comprend l'étape suivante :
le fait de vérifier si un identifiant du panneau de signalisation électronique correspond à un identifiant prédéterminé.

4. Procédé selon la revendication 3, dans lequel le fait de vérifier (104) si le panneau de signalisation électronique est une source d'information autorisée comprend en outre les étapes suivantes :
si les informations concernant le signal routier comprennent des informations concernant une position du signal routier, le fait de vérifier si l'identifiant prédéterminé est autorisé pour la position du signal routier ; et/ou
si les informations concernant le signal routier comprennent des informations concernant un type de signal routier, le fait de vérifier si l'identifiant prédéterminé est autorisé pour le type de signal routier ; et/ou
si les informations concernant le signal routier comprennent des informations concernant une validité temporelle du signal routier, le fait de vérifier si l'identifiant prédéterminé est autorisé pour la période de validité temporelle du signal routier.
